# EUROPÄISCHE PATENTSCHRIFT

(11) **EP 1 449 697 B1**
(45) Veröffentlichungstag und Bekanntmachung des Hinweises auf die Patenterteilung: **03.06.2009**
(21) Anmeldenummer: 04003461.3
(22) Anmeldetag: 17.02.2004
(51) Int. Cl.: B60J 5/10

(54) **Kraftfahrzeug-Heckklappe**
Vehicle tailgate
Hayon arrière de véhicule

(30) Priorität: 20.02.2003 DE 10307207
(43) Veröffentlichungstag der Anmeldung: 25.08.2004
(73) Patentinhaber: ADAM OPEL AG, 65423 Rüsselsheim (DE)
(72) Erfinder: Kiefer, Thomas, 60435 Frankfurt (DE)

(56) Entgegenhaltungen:
- EP-A- 1 065 083
- DE-A1- 19 646 939
- US-A- 6 018 912

## Beschreibung

Die vorliegende Erfindung betrifft eine Kraftfahrzeug-Heckklappe mit selbsttätiger Öffnungs- und gegebenenfalls selbsttätiger Schließfunktion nach dem Oberbegriff des Anspruchs 1.

Herkömmliche Heckklappen von Kraftfahrzeugen weisen in aller Regel an beiden Seiten links und rechts von der Heckklappe angeordnete Gasfedern auf, welche ein Öffnen der Heckklappe derart unterstützen, dass die symmetrisch verteilte Hubkraft beider gleich stark ausgelegter Gasfedern das Eigengewicht der Heckklappe kompensieren und auf diese Weise das händische Öffnen der Heckklappe durch den Nutzer des Fahrzeugs wesentlich erleichtern. Eine Verwindung der Heckklappe ist beim Öffnen dabei aufgrund der symmetrischen Krafteinleitung weitestgehend ausgeschlossen.

Derlei Gasdruckfedern sind beispielsweise in der DE 195 48 139 A1 diskutiert, wobei die dort diskutierten speziellen Gasfedern zudem eine einstellbare Endposition aufweisen, so dass zwei Endstellungen beim Öffnen der Heckklappe verfügbar sind. Auf diese Weise kann die Heckklappe mit diesen speziellen Gasdruckfedern je nach Bedarf lediglich teilweise oder ganz geöffnet werden.

Das Schließen solcher bekannter herkömmlicher Heckklappen erfolgt händisch, indem an einem Griff oder dergleichen an der Heckklappe von Hand angezogen und die Heckklappe somit geschlossen wird. Wenn dabei ein Griff, eine Griffschale oder dergleichen mittig angeordnet ist, so dass zum Schließen an der Heckklappe mittig bzw. zentral angezogen werden kann, ist dies hinsichtlich einer möglichen Verwindung der Heckklappe unproblematisch. Wenn jedoch der Griff bzw. die Griffschale - aufgrund des in der Mitte der Heckklappenunterkante häufig bereits für ein Heckklappenschloss, eine Kennzeichenmontage, eine Kennzeichenbeleuchtung, einen Wischerblattantrieb oder dergleichen verbrauchten Bauraums - außermittig am linken oder rechten Rand der Heckklappe angeordnet ist, lässt sich eine Verwindung der Heckklappe beim Schließen nicht vermeiden. Eine solche Verwindung der Heckklappe wird in den dabei betroffenen Kraftfahrzeug-Preissegmenten jedoch häufig vom Käufer als unvermeidbar hingenommen.

Aus der Praxis sind weiterhin Kraftfahrzeug-Heckklappen mit selbsttätiger Öffnungs- und Schließfunktion bekannt. Entsprechend teure Fahrzeugmodelle der Oberklasse weisen dabei zwei Hub- und Zugorgane auf, die jeweils links und rechts im Randbereich der Heckklappe angelenkt sind. Die beiden Hub- und Zugorgane, die häufig hydraulisch angetrieben sind, werden dabei so ausgelegt, dass beim Öffnen und Schließen der Heckklappe die Heckklappe möglichst symmetrisch mit den dafür erforderlichen Kräften beaufschlagt wird, um beispielsweise ein Verwinden der Heckklappe oder Funktionsstörungen zu vermeiden.

Preiswerte Fahrzeugmodelle der Mittel- oder auch der Kleinwagenklasse weisen demgegenüber häufig aus Kostengründen lediglich an einer Seite der Heckklappe ein Hub- und gegebenenfalls Zugorgan zum selbsttätigen Öffnen oder ggf. auch Schließen der Heckklappe auf. Dabei ist das Hub- und ggf. Zugorgan einerseits mit der Fahrzeugkarosserie, beispielsweise an einer hinteren Dachkante oder im Bereich der C-Säule, und andererseits mit der Heckklappe, beispielsweise an deren Seitenkante, schwenkbar verbunden.

Wird nun eine solche Heckklappe mit selbsttätiger Öffnungs- und ggf. Schließfunktion aus dem geöffneten Zustand heraus geschlossen, beispielsweise mittels eines selbsttätigen einseitigen Zuziehens durch das an einer Seite angeordnete Hub-/Zugorgan oder durch ein außermittig angreifendes, einseitiges händisches Zuziehen, so wird die Heckklappe zwangsläufig einseitig tordiert bzw. verwunden.

Die Verwindung der Heckklappe führt weiterhin dazu, dass das Schloss der Heckklappe kurz vor dem Schließen, also kurz vor dem Einlaufen beispielsweise eines Schließbügels bzw. Schließbolzens des Schlosses in eine Schließkulisse bzw. Schlossfalle eine Querverschiebung relativ zu einander aufweist, welche dann vom Schloss bzw. vom Schließmechanismus über den verbleibenden, relativ kurzen Weg bis zum endgültig geschlossenen Zustand der Heckklappe mit eingerastetem Schloss eliminiert werden muss.

Dabei kann die Querverschiebung bzw. der Querversatz aufgrund der Verwindung bzw. Tordierung der Heckklappe im ungünstigsten Fall so groß sein, dass der Schließbolzen bzw. Schließbügel derart außermittig zur Schließkulisse bzw. zur Schlossfalle positioniert ist, dass ein Schließen des Schlosses massiv behindert wird und zu erhöhten, nicht tolerierbaren Abnutzungserscheinungen an der Schlossfalle bzw. der Schließkulisse führt, wenn nicht sogar im schlimmsten Falle ein sauberes Schließen des Schlosses unmöglich wird.

Dementsprechend ist in der Praxis vorgeschlagen worden, zur Elimination der Querverschiebung des Schlosses beim eigentlichen Schließvorgang eine entsprechende Anpassung des Schlosseinlaufes vorzusehen. Hierfür wird zum einen der Schließbügel bzw. der Schließbolzen außermittig angeordnet, so dass dieser an einer Stelle zu liegen kommt, welche dem erwarteten Auftreffbereich der Schließkulisse bzw. der Schlossfalle bei tordierter Heckklappe entspricht. Zum anderen wird die Schlossfalle bzw. Schließkulisse asymmetrisch ausgebildet, so dass diese in Richtung des erwarteten Versatzes einen weiter ausgreifenden Einlauf aufweist.

Diese Maßnahmen haben jedoch den Nachteil, dass bei der Montage des Schlosses aufgrund dessen Asymmetrie ständig eine erhöhte Aufmerksamkeit geboten ist, um dass Schloss hinsichtlich seiner späteren Positionierung richtig zu montieren. Zudem sind bei der Montage der Heckklappe zusätzliche Abstimmungsschritte notwendig, um die asymmetrisch ausgebildete Schließkulisse und den gewollt versetzten Schließbügel für einen perfekten Eingriff miteinander entsprechend in Abhängigkeit von der zu erwartenden Verwindung der Heckklappe aufeinander abzustimmen bzw. auszurichten.

Ganz abgesehen davon, muss dabei das Heckklappenschloss beim Schließen eine hohe Querkraft aufnehmen und die Heckklappe bewegt sich beim Schließen sichtbar in Querrichtung, um die zuvor, während des Senk- bzw. Schließvorgangs aufgetretene Verwindung wieder zu Null auszugleichen. Dies führt in absehbarer Zeit nicht nur zu unerwünschten Fehlfunktionen des derart belasteten Heckklappenschlosses, sondern auch zu Defekten an den Scharnieren bzw. Anlenkpunkten der Heckklappe an der Fahrzeugkarosserie. In ähnlicher Weise dürften erhöhte Abnutzungserscheinungen an den Abdichtungen der Heckklappe gegenüber der Fahrzeugkarosserie auftreten, was zu einem vorzeitigen Verschleiß und im Betrieb zu störenden Quietschgeräuschen führen kann.

Eine Kraftfahrzeug-Heckklappe gemäß dem Oberbegriff des Anspruchs 1 ist aus der DE 196 46 939 A1 bekannt.

Dementsprechend ist es Aufgabe der vorliegenden Erfindung, unter Vermeidung der vorstehend diskutierten Nachteile, eine preiswert herstellbare Kraftfahrzeug-Heckklappe vorzuschlagen, die selbsttätig Öffnen und gegebenenfalls auch Schließen kann, ohne dass dabei eine merkliche Verwindung der Heckklappe auftritt.

Diese Aufgabe wird gelöst durch die Merkmale des Anspruchs 1.

Dabei wird eine Kraftfahrzeug-Heckklappe mit selbsttätiger Öffnungs- und gegebenenfalls Schließfunktion mit einem an einer Seite der Heckklappe angeordneten ersten Hub- und gegebenenfalls Zugorgan zum Öffnen und Schließen der Heckklappe vorgeschlagen, welches mit einer Fahrzeugkarosserie an der Heckklappe schwenkbar verbunden ist. Hierbei wird erstmals vorgeschlagen, dass an der gegenüberliegenden Seite der Heckklappe, also gegenüber dem ersten Hub- und ggf. Zugorgan, ein zweites Huborgan angeordnet ist, das ebenfalls mit der Fahrzeugkarosserie an der Heckklappe schwenkbar verbunden ist, wobei dessen Hubkraft FH₂ kleiner ist, als die Hubkraft FH₁ des ersten Hub- und ggf. Zugorgans.

Damit wird in vorteilhafter Weise beim Schließen einer geöffneten Heckklappe die vorstehend diskutierte Querverschiebung bzw. Verwindung oder Tordierung der Heckklappe weitestgehend kompensiert. Bei entsprechender Abstimmung der Hubkräfte der beiden Huborgane kann eine Verwindung sogar vollständig vermieden werden, obgleich beim Schließen der Heckklappe außermittig an deren Rand angezogen bzw. eine erforderliche Zugkraft zum Schließen eingeleitet wird.

Die Vorkompensierung der Querbewegung der Heckklappe erfolgt dabei durch die unsymmetrische Kraftverteilung in den Huborganen. Aufgrund der im Idealfall zu Null kompensierten Verwindung der Heckklappe beim Schließen derselben und der damit auf Null reduzierten Querbewegung der Heckklappe relativ zur Fahrzeugkarosserie bzw. desjenigen Teiles des in der Heckklappe montierten Heckklappenschlosses relativ zum korrespondierenden, im Fahrzeugrahmen montierten Schlossgegenstück, treten in vorteilhafter Weise wesentlich geringere Kräfte am Schließmechanismus bzw. am Schluss der Heckklappe auf, wenn der Schließbolzen bzw. Schließbügel in die Schließkulisse bzw. die Schlossfalle einläuft. Damit verringert sich in weiter vorteilhafter Weise die Beanspruchung des Schlosses, so dass dieses eine wesentlich höhere Lebensdauer erzielen kann.

Zudem tritt beim Schließen der Heckklappe und insbesondere beim Einrasten des Schlosses eine deutlich geringere und im Idealfall keine Querbewegung der Heckklappe auf, so dass der Schließvorgang als solcher optisch wesentlich gefälliger erscheint. Dabei sind in weiter vorteilhafter Weise kritische Annäherungen der seitlichen Fugen, beispielsweise eine Annäherung der Heckklappenkante gegenüber der C-Säule oder der Kraftfahrzeugseitenwand, vollständig vermieden. Damit wird ein für das Auge des Betrachters akzeptables symmetrisches Schließbild erzielt.

Dabei kommt es in weiter vorteilhafter Weise nicht darauf an, dass das erste Hub- und gegebenenfalls Zugorgan zwingend als Hub- und Zugorgan ausgebildet ist. Die zum Schließen der Heckklappe erforderliche Zugkraft kann gegebenenfalls auch durch einseitiges händisches Ziehen an der Heckklappe aufgebracht werden, ohne dass dabei die dem Stand der Technik als nachteilig empfundene Verwindung der Heckklappe zu befürchten ist. Gleichwohl ist in einer besonders bevorzugten Ausführungsform der erfindungsgemäßen Heckklappe ein selbsttätiges bzw. automatisches Schließen der Heckklappe vorgesehen, was dem Nutzer des Kraftfahrzeugs einen deutlich erhöhten Komfort bietet.

Weitere vorteilhafte Weiterbildungen und Aspekte der Erfindung ergeben sich aus den Merkmalen der Unteransprüche.

So ist es in einer bevorzugten Ausführungsform der erfindungsgemäßen Kraftfahrzeug-Heckklappe vorgesehen, dass das erste Hub- und ggf. Zugorgan zur Erzeugung der Hubbewegung eine Gasfeder aufweist. Damit können die bei modernen Gasfedern aus dem Stand der Technik bekannten Vorteilen auch problemlos auf die erfindungsgemäße Heckklappe in synergetischer Weise übertragen werden. Darüber hinaus bieten insbesondere Gasdruckfedern den Vorteil, dass deren Hubkraft sehr fein und besonders genau eingestellt werden kann, so dass die vorstehend diskutierte, vorteilhafte Kompensierung einer Querbewegung der Heckklappe beim Schließen derselben optimal eingestellt werden kann.

In einer weiter bevorzugten Ausführungsform ist vorgesehen, dass das zweite Huborgan ebenfalls als Gasfeder ausgebildet ist. Damit können die Huborgane kostengünstig hergestellt, als vorkonfektionierte Teile in großer Serie bezogen und mit den selben Werkzeugen verbaut werden. Dies hilft nicht nur die Herstellungskosten des Gesamtfahrzeuges zu senken, sondern verringert zugleich durch die Reduzierung der Teilevielfalt den Bestell- und Lagerhaltungsaufwand. Zudem zeichnen sich Gasfedern durch ihre Robustheit und Langlebigkeit vorteilhaft aus.

Alternativ können die Hub- und ggf. Zugorgane auch hydraulisch oder mit Druckluft betrieben werden. Hydraulische wie auch Druckluft-Antriebe zeichnen sich ebenfalls durch ihre Robustheit und Langlebigkeit aus. Zudem können auch hydraulische wie auch Druckluft-Antriebe sehr fein und damit sehr genau abgestimmt werden. Des weiteren sind auch elektrische Stellantriebe für die Hub- und ggf. Zugorgane verwendbar.

Gemäß einer weiter bevorzugten Ausführungsform ist vorgesehen, dass die Heckklappe einen Schließmechanismus mit einer Schließkulisse und einen mit der Schließkulisse in Eingriff stehenden Schließbolzen aufweist, wobei die Schließkulisse symmetrisch zu deren Mittellinie ausgebildet und der Schließbolzen auf der Mittellinie angeordnet ist. Damit kann in vorteilhafter Weise das Schloss bzw. der Schließmechanismus äußerst preiswert ausgestaltet werden. Darüber hinaus entfällt die aus der Praxis als nachteilig bekannte unsymmetrische Ausgestaltung des Schlosseinlaufes zur Kompensierung eines Querversatzes der Heckklappe beim Schließen, da bei der erfindungsgemäßen Heckklappe ein solcher Querversatz nicht auftritt. Zugleich entfallen die daraus resultierenden, erheblichen Nachteile einer unerwünscht hohen Belastung des Schlosses als auch eines unerwünscht hohen Verschleißes. Darüber hinaus sind die Schließkräfte bei einem symmetrisch ausgestalteten Schloss wesentlich geringer als bei einem asymmetrisch ausgebildeten Schloss, was zu einer Erhöhung der Lebensdauer führt.

Die vorstehend diskutierte Erfindung wird nachfolgend in Ausführungsbeispielen anhand der Figuren der Zeichnung näher erläutert. Es zeigt:
- Fig. 1: in einer schematisch vereinfachten Seitenansicht das Heck eines Kraftfahrzeuges mit teilweise (gestrichelt dargestellt) und mit vollständig geöffneter Heckklappe;
- Fig. 2: ein Ausführungsbeispiel einer erfindungsgemäßen Kraftfahrzeug-Heckklappe in schematisch stark vereinfachter Darstellung; und
- Fig. 3: ein Heckklappenschloss in einer Detailansicht 3a mit außermittig versetztem Schließbolzen, und in einer Detailansicht 3b mit einem mittig zentrierten Schließbolzen.

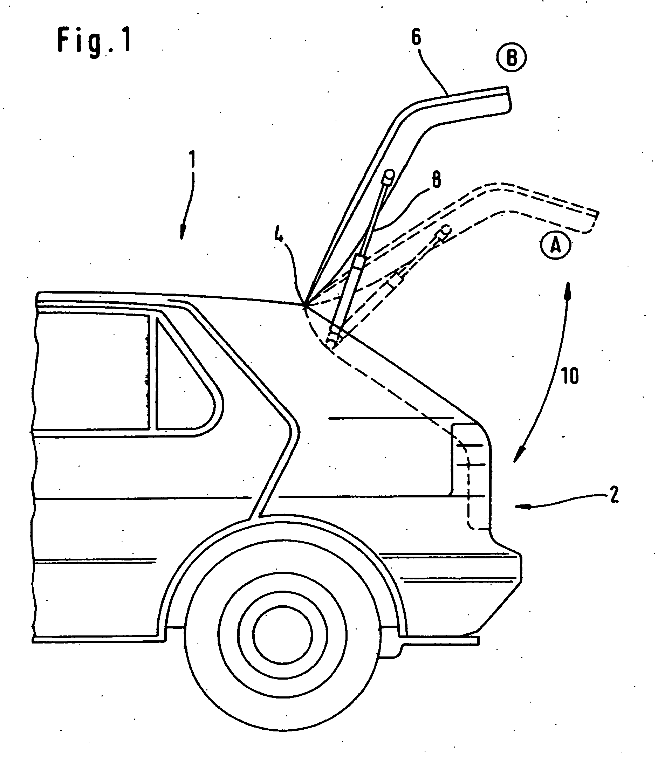

In Fig. 1 ist in schematisch vereinfachter Weise ein Kraftfahrzeug 1 mit dessen Heck 2 stellvertretend für Kraftfahrzeuge mit Heckklappe dargestellt. An einer hinteren Dachkante 4 ist in herkömmlicher Weise eine Heckklappe 6 mit nicht näher dargestellten Scharnieren oder dergleichen schwenkbar angelenkt. Um das Öffnen der Heckklappe 6 zu erleichtern, wird deren Eigengewicht beispielsweise durch ein Huborgan 8 kompensiert, welches in der hier dargestellten Variante als Gasdruckfeder ausgebildet ist.

In Fig. 1 ist die Heckklappe 6 mit gestrichelten Linien in teilweise geöffnetem Zustand A und in durchgezogenen Linien in vollständig geöffnetem Zustand B dargestellt. Das Öffnen und Schließen der Heckklappe 6 ist dabei durch den Pfeil 10 symbolisiert.

Werden bei einer herkömmlichen Heckklappe links und rechts von der Heckklappe Gasfedern mit gleicher Gasfederkraft eingesetzt, wie dies häufig üblich ist, so entsteht beim einseitigen, am nach außen hin orientierten Rand angreifenden Zuziehen eine einseitige Belastung der Heckklappe, die eine deutliche Querbewegung bzw. Torsion der Heckklappe verursacht.

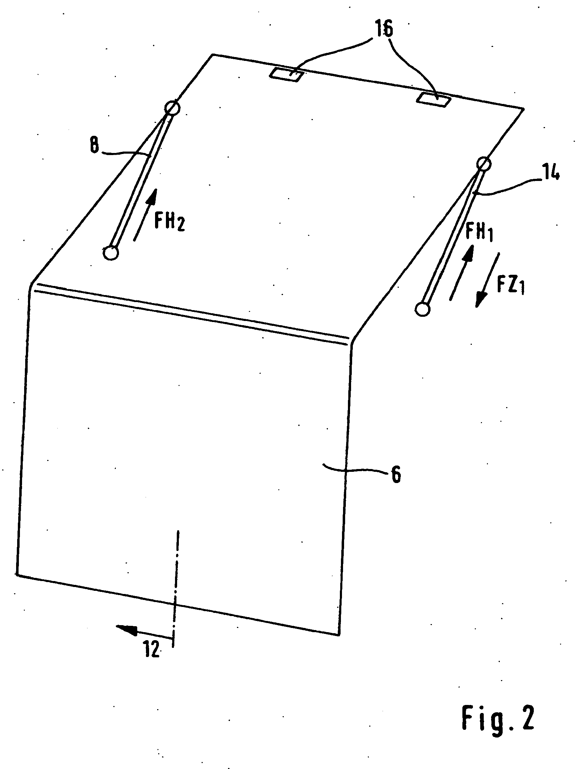

Diese Querbewegung bzw. der daraus resultierende Querweg beim Schließen einer herkömmlichen Heckklappe ist in Fig. 2 in einer schematisch vereinfachten Darstellung einer erfindungsgemäßen Heckklappe 6 mit dem in dieser Darstellung nach links weisenden Pfeil 12 angedeutet. Dieser Querversatz bzw. Querweg 12 muss dann beim Schließen einer herkömmlichen Heckklappe von der Schlosskinematik eines hier in Fig. 2 nicht näher dargestellten Schlosses bzw. Schließmechanismus beseitigt werden, damit eine herkömmliche Heckklappe in vollständig geschlossener Stellung dann auch in ihrer Sollposition zu liegen kommt.

Dementsprechend ist in der in Fig. 2 dargestellten beispielhaften Ausführungsform einer erfindungsgemäßen Heckklappe 6 vorgesehen, dass das rechte Hub- und ggf. Zugorgan 14, welches beispielsweise als Gasfeder ausgebildet sein kann, eine Hubkraft FH₁ aufweist, welche größer ist, als die Hubkraft FH₂ des hier an der linken Seite der Heckklappe 6 angelenkten Huborgans 8.

Dabei ist die Heckklappe 6 in bekannter Weise mit entsprechenden Gelenken oder Scharnieren 16 an einer in Fig. 2 nicht näher dargestellten hinteren Dachkante bzw. Karosseriekante angelenkt. Dementsprechend sind das Huborgan 8 und das Hub- und ggf. Zugorgan 14 in bekannter Weise an der Fahrzeugkarosserie, beispielsweise an der C-Säule, schwenkbar angelenkt.

Die zum Schließen bzw. Zuziehen der Heckklappe 6 aufzubringende Zugkraft ist mit dem Pfeil FZ₁ rechts vom rechten Hub-/Zugorgan 14 symbolisiert.

Da die Kräfte der Huborgane 8 und 14 bzw. der Gasfedern derart unsymmetrisch gewählt sind, dass die Hubkraft FH₂ des Huborgans 8 kleiner ist als die Hubkraft FH₁ des Hub-/Zugorgans 14, kann der bei herkömmlichen Heckklappen auftretende Querweg 12 beim Zuziehen der erfindungsgemäßen Heckklappe 6 bereits wesentlich vorkompensiert oder sogar gänzlich vermieden werden.

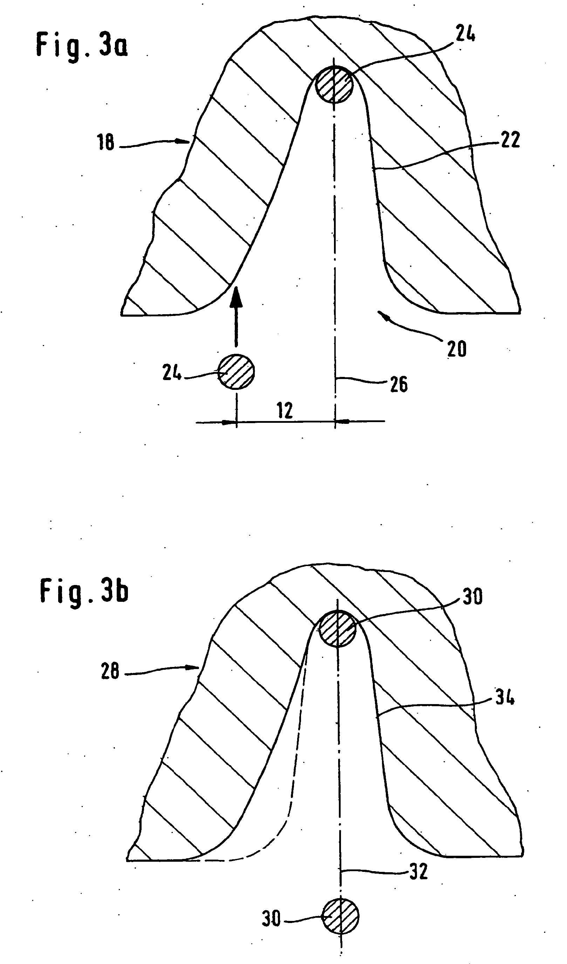

In Fig. 3 in der Teilansicht 3a in schematisch vereinfachter Weise ein Schließmechanismus 18 dargestellt, der einen asymmetrischen Schlosseinlauf 20 einer Schlossfalle bzw. Schließkulisse 22 aufweist. Beim Schließen der hier nicht näher dargestellten Heckklappe und dem Einrasten des Schlosses muss bei herkömmlichen Heckklappen der vorstehend diskutierte Querversatz 12 eines Schließbügels bzw. Schließbolzens 24 relativ zur Mittellinie 26 des Schlosses 18 beim Schließen des Schlosses abgebaut werden. Dies führt zwangsläufig zu einer hohen Belastung nicht nur der Flanken der Schließkulisse 22 sondern auch zu einer enormen Belastung des Schließbolzens 24 auf seinem Weg vom gerade noch offenen bis zum geschlossenen Zustand. Ein vorzeitiger Verschleiß eines solchen herkömmlichen Schlosses ist kaum zu vermeiden.

Dem gegenüber ist in der Teilansicht 3b in schematisch vereinfachter Weise der Schließvorgang eines Schlosses 28 bei einer erfindungsgemäßen Heckklappenvariante dargestellt. Aufgrund der durch die hier nicht dargestellten Huborgane kompensierte Querbewegung bzw. Torsion der Heckklappe kann der Schließbügel bzw. Schließbolzen 30 sauber in der Mitte des Schlosses 38 entlang dessen Mittellinie 32 ins Schloss einrasten, ohne dass dabei ein unerwünschter Verschleiß oder zusätzliche Querkräfte auf die Flanken der Schlossfalle bzw. Schließkulisse 34 auftreten würden. Dabei kann die Schließkulisse 34, wie hier dargestellt, asymmetrisch ausgebildet sein. Bevorzugt wird eine symmetrische Ausgestaltung der Schließkulisse 34 zur Reduzierung der Herstellungskosten des Schlosses 28, wie dies in der linken Bildseite gestrichelt angedeutet ist.

Die vorliegende Erfindung schafft damit erstmals eine Kraftfahrzeug-Heckklappe mit selbsttätiger Öffnungs- und gegebenenfalls Schließfunktion, wobei an einer Seite der Heckklappe ein erstes Huborgan, dass gegebenenfalls auch zugleich ein Zugorgan sein kann, angeordnet ist, zum Öffnen und Schließen der Heckklappe, wobei dieses Hub- und gegebenenfalls Zugorgan mit der Fahrzeugkarosserie und der Heckklappe schwenkbar verbunden ist. Dabei ist erstmals an der dem ersten Hub- und gegebenenfalls Zugorgan gegenüber liegenden Seite der Heckklappe ein zweites Huborgan angeordnet. Dieses ist ebenfalls mit der Fahrzeugkarosserieund der Heckklappe schwenkbar verbunden. Dabei wird die Hubkraft des zweiten Huborgans derart gewählt, dass diese kleiner ist, als die Hubkraft des ersten Hub- und gegebenenfalls Zugorgans.

### Bezugszeichenliste

- 1: Kraftfahrzeug
- 2: Heck des Kraftfahrzeugs
- 4: Dachkante
- 6: Heckklappe
- 8: Zweites Huborgan
- 10: Öffnungs-/Schließbewegung
- 12: Querversatz
- 14: Erstes Hub- und ggf. Zugorgan
- 16: Scharniere

- FH₁: Hubkraft erstes Hub- und ggf. Zugorgan
- FH₂: Hubkraft zweites Huborgan

- 18: Schloss einer herkömmlichen Heckklappe
- 20: Schlosseinlauf
- 22: Schließkulisse
- 24: Schließbolzen
- 26: Mittellinie
- 28: Schließmechanismus erf. Heckklappe
- 30: Schließbolzen
- 32: Mittellinie
- 34: Schließkulisse

## Patentansprüche

1. Kraftfahrzeug-Heckklappe (6) mit selbsttätiger Öffnungs- und ggf. mit selbsttätiger Schließfunktion mit einem an einer Seite der Heckklappe (6) angeordneten ersten Hub- und ggf. Zugorgan (14) zum Öffnen und ggf. zum Schließen der Heckklappe (6), welches mit einer Fahrzeugkarosserie (1, 2) und der Heckklappe (6) schwenkbar verbunden ist, und mit einem an der dem ersten Hub- und ggf. Zugorgan (14) gegenüberliegenden Seite der Heckklappe (6) angeordneten zweiten Huborgan (8), das ebenfalls mit der Fahrzeugkarosserie (1, 2) und der Heckklappe (6) schwenkbar verbunden ist **dadurch gekennzeichnet, dass** die Hubkraft (FH₂₎ des zweiten Huborgans (8) kleiner ist, als die Hubkraft (FH₁₎ des ersten Hub- und ggf. Zugorgans (14).

2. Kraftfahrzeug-Heckklappe nach Anspruch 1, **dadurch gekennzeichnet, dass** das erste Hub- und ggf. Zugorgan (14) als Hub- und Zugorgan ausgebildet ist, zum selbsttätigen Öffnen und Schließen der Heckklappe (6).

3. Kraftfahrzeug-Heckklappe nach Anspruch 1 oder 2, **dadurch gekennzeichnet, dass** das erste Hub- und ggf. Zugorgan (14) zur Erzeugung der Hubbewegung eine Gasfeder aufweist.

4. Kraftfahrzeug-Heckklappe nach einem der Ansprüche 1 bis 3, **dadurch gekennzeichnet, dass** das zweite Huborgan (8) als Gasfeder ausgebildet ist.

5. Kraftfahrzeug-Heckklappe nach einem der Ansprüche 1 bis 4, **dadurch gekennzeichnet, dass** die Hub- und ggf. Zugorgane (8, 14) elektrische, hydraulische oder mit Druckluft betriebene Antriebe aufweisen.

6. Kraftfahrzeug-Heckklappe nach einem der Ansprüche 1 bis 5, **dadurch gekennzeichnet, dass** die Heckklappe (6) einen Schließmechanismus (28) mit einer Schließkulisse (34) und einen mit der Schließkulisse (34) in Eingriff stehenden Schließbolzen (30) aufweist, wobei die Schließkulisse symmetrisch zu deren Mittellinie (32) ausgebildet und der Schließbolzen (30) auf der Mittellinie (32) angeordnet ist.

## Claims

1. Vehicle tailgate (6) with automatic opening and, if necessary, automatic closing function, which is provided with a first lifting and, if necessary, pulling device (14) located at one side of the tailgate (6), which, for opening and, if necessary, closing the tailgate (6), is swivel mounted to a car body (1, 2) and the tailgate (6), and which is also provided with a second lifting device (8) which is arranged at the opposite side of the tailgate (6) of the first lifting and, if necessary, pulling device and is also connected to the vehicle body (1, 2) and the tailgate (6), **characterised in that** the lifting force (FH2) of the second lifting device (8) is smaller than the lifting force (FH1) of the first lifting and, if necessary, pulling device (14).

2. Vehicle tailgate according to claim 1, **characterised in that** the first lifting and, if necessary, pulling device (14) is designed as lifting and pulling device for automatically opening and closing the tailgate (6).

3. Vehicle tailgate according to claim 1 or 2, **characterised in that** the first lifting and, if necessary, pulling device (14) is provided with a gas spring for generating the lifting movement.

4. Vehicle tailgate according to one of the claims 1 to 3, **characterised in that** the second lifting device (8) is designed as gas spring.

5. Vehicle tailgate according to one of the claims 1 to 4, **characterised in that** the lifting and, if necessary, the pulling devices (8, 14) are provided with electric or hydraulic drives or drives which are operated with compressed air.

6. Vehicle tailgate according to one of the claims 1 to 5, **characterised in that** the tailgate (6) is provided with a closing device (28) which has a closing slide guide (34) and a cotter pin (30) which is engaged in the closing slide guide (34), whereby the closing slide guide is located symmetrically towards its centre line (32) and the cotter pin (30) is arranged on the centre line (32).

## Revendications

1. Hayon arrière de voiture (6) avec ouverture automatique et, au besoin avec fonction de fermeture automatique constitué d'un premier organe de sustentation et au besoin d'un organe de traction sur le côté du hayon arrière (6) pour permettre l'ouverture et, au besoin, la fermeture du hayon arrière de voiture (6), lequel est relié de manière pivotante à une carrosserie de voiture et au hayon arrière (6), **caractérisé en ce que,** au côté opposé du hayon arrière (6) au premier organe de sustentation et au besoin à l'organe de traction (14), un deuxième organe de sustentation (8) est relié pareillement de manière pivotante à la carrosserie de voiture (1, 2) et au hayon arrière (6), la force de sustentation (FH2) est plus petite que la force de sustentation (FH1) du premier organe de sustentation et au besoin de l'organe de traction (14).

2. Hayon arrière de voiture selon revendication 1, **caractérisé en ce que**, le premier organe de sustentation et au besoin l'organe de traction (14) se présente sous forme d'organe de sustentation et d'organe de traction, pour permettre l'ouverture et fermeture automatique du hayon arrière (6).

3. Hayon arrière de voiture selon revendication 1 ou 2, **caractérisé en ce que,** le premier organe de sustentation et au besoin l'organe de traction (14) présente un vérin à gaz afin de produire le mouvement de course.

4. Hayon arrière de voiture selon l'une des revendications 1 à 3, **caractérisé en ce que,** le deuxième organe de sustentation (8) se présente sous forme de vérin à gaz.

5. Hayon arrière de voiture selon l'une des revendications 1 à 4, **caractérisé en ce que**, l'organe de sustentation et, au besoin, l'organe de traction (8, 14) présentent des propulsions exercées électriquement, hydrauliquement ou par air comprimé.

6. Hayon arrière de voiture selon l'une des revendications 1 à 5, **caractérisé en ce que**, le hayon arrière de voiture (6) présente un mécanisme de fermeture (28) avec une coulisse de fermeture (34) et un boulon à clavette (30) étant en prise avec la coulisse de fermeture (34), où la fermeture coulisse se présente symétriquement à sa médiane (32) et le boulon à clavette (30) sur la médiane (32).
